# EUROPEAN PATENT APPLICATION

(11) **EP 3 354 547 A1**
(43) Date of publication of application: **01.08.2018**
(21) Application number: 16864201.5
(22) Date of filing: 08.11.2016
(51) Int. Cl.: B62J 99/00, B62K 3/00, B62M 6/45, B62M 7/12

(54) **TWO-WHEELED VEHICLE**

(30) Priority: 09.11.2015 JP 2015219187
(71) Applicant: Yamaha Hatsudoki Kabushiki Kaisha, Iwata-shi, Shizuoka 438-8501 (JP)
(72) Inventor: TANAKA, Hiroshi, Iwata-shi Shizuoka 438-8501 (JP)
(74) Representative: Zimmermann, Tankred Klaus
(86) International application number: PCT/JP2016/083065
(87) International publication number: WO 2017/082240

(57) **Abstract**

A two-wheeled vehicle in which each of a steerable wheel and a non-steerable wheel is driven by motors is provided with a new function. A control device includes an in-tilt front-rear driving force adjusting section. In a case where a vehicle body tilts and a travelling direction of the steerable wheel tilts in a left-right direction of the vehicle with respect to a travelling direction of the non-steerable wheel, the in-tilt front-rear driving force adjusting section adjusts at least one of a driving force generated by a steerable wheel driving motor and a driving force generated by a non-steerable wheel driving motor, based on a tilt state detected by a left-right tilt state detecting section. The in-tilt front-rear driving force adjusting section sets an absolute value of the driving force generated by the steerable wheel driving motor larger than zero. The control device controls a moment of causing the vehicle body to tilt the left direction of the vehicle or to tilt in the right direction of the vehicle by adjusting a resultant force of the driving force generated by the steerable wheel driving motor and the driving force generated by the non-steerable wheel driving motor.

## Description

### TECHNICAL FIELD

The present teaching relates to a two-wheeled vehicle, and more particularly to a two-wheeled vehicle including a first motor that generates a driving force to be transferred to a front wheel and a second motor that generates a driving force to be transferred to a rear wheel.

### BACKGROUND ART

Two-wheeled vehicles that run by using driving forces of motors have been proposed in recent years. Such a two-wheeled vehicle is disclosed in, for example, Japanese Patent Application Publication No. 2015-98226.

In the two-wheeled vehicle disclosed in the publication described above, motors are disposed for a front wheel and a rear wheel. The motor disposed for the front wheel generates a driving force to be transferred to the front wheel. The motor disposed for the rear wheel generates a driving force to be transferred to the rear wheel.

The two-wheeled vehicle disclosed in the publication described above includes an accelerator grip and a pedal that can be operated by a rider. The driving forces generated by the motors for the front wheel and the rear wheel vary in accordance with the amount of operation of the accelerator grip and the magnitude of a pedaling force. That is, the vehicle speed varies in accordance with the amount of operation of the accelerator grip and the magnitude of the pedaling force. The rider can drive the two-wheeled vehicle at a desired vehicle speed by adjusting the amount of operation of the accelerator grip and the magnitude of the pedaling force.

### SUMMARY OF INVENTION

It is an object of the present teaching to provide a new function to a two-wheeled vehicle that drives each of a steerable wheel and a non-steerable wheel by motors.

A two-wheeled vehicle according to an embodiment of the present teaching includes a vehicle body, a steerable wheel, a steerable wheel driving motor, a non-steerable wheel, a non-steerable wheel driving motor, a left-right tilt state detecting section, and a control device. The two-wheeled vehicle has a vehicle body that tilts to left when the two-wheeled vehicle turns to the left and tilts to right when the two-wheeled vehicle turns to the right. The two-wheeled vehicle includes one steerable wheel. The steerable wheel is supported by the vehicle body. The steerable wheel is located at a center in left-right directions of the vehicle. The steerable wheel is a wheel capable of being steered. The steerable wheel driving motor generates a driving force to be transferred to the steerable wheel. The steerable wheel driving motor is rotatable in a forward direction and a reverse direction. The two-wheeled vehicle includes one non-steerable wheel. The non-steerable wheel is supported by the vehicle body. The non-steerable wheel is located at the center in the left-right directions of the vehicle. The non-steerable wheel is disposed forward or rearward of the non-steerable wheel in front-rear directions of the vehicle. The non-steerable wheel is a wheel incapable of being steered. The non-steerable wheel driving motor generates a driving force to be transferred to the non-steerable wheel. The non-steerable wheel driving motor is rotatable in a forward direction and a reverse direction. The left-right tilt state detecting section is mounted on the vehicle body. The left-right tilt state detecting section detects a tilt state of the vehicle body in the left-right directions of the vehicle. The control device controls each of driving forces generated by the steerable wheel driving motor and the non-steerable wheel driving motor. The control device includes an in-tilt front-rear driving force adjusting section. The in-tilt front-rear driving force adjusting section adjusts at least one of the driving force generated by the steerable wheel driving motor and the driving force generated by the non-steerable wheel driving motor based on the tilt state detected by the left-right tilt state detecting section in a case where the vehicle body tilts and a travelling direction of the steerable wheel is directed to the left direction of the vehicle or is directed to the right direction of the vehicle relative to a travelling direction of the non-steerable wheel. The in-tilt front-rear driving force adjusting section sets an absolute value of the driving force generated by the steerable wheel driving motor larger than zero. The control device controls the moment of inertia of causing the vehicle body to tilt in the left direction of the vehicle or to tilt in the right direction of the vehicle by adjusting a resultant force of the driving force generated by the steerable wheel driving motor and the driving force generated by the non-steerable wheel driving motor.

In the two-wheeled vehicle, a state in which the vehicle body tilts in the left direction of the vehicle or tilts in the right direction of the vehicle can be canceled. Thus, the two-wheeled vehicle can stand by itself.

When the vehicle body tilts in the left direction of the vehicle or tilts in the right direction of the vehicle, the control device may perform control of adjusting the resultant force of the driving force generated by the steerable wheel driving motor and the driving force generated by the non-steerable wheel driving motor so that the vehicle body rises or may perform control so as to adjust a characteristic in rising of the vehicle body.

The two-wheeled vehicle may further include a handlebar and an angle detecting device. The handlebar is disposed on the vehicle body and changes a travelling direction of the vehicle. The angle detecting device outputs angle information indicating an operation angle of the handlebar.

The control device controls the driving force of each of the steerable wheel driving motor and the non-steerable wheel driving motor in a plurality of operation modes. The plurality of operation modes include a travelling mode and a vehicle body tilt controlling mode. The travelling mode is an operation mode in which the vehicle travels. The vehicle body tilt controlling mode is an operation mode in which a moment of causing the vehicle body to tilt in the left direction of the vehicle or to tilt in the right direction of the vehicle is controlled. In the vehicle body tilt controlling mode, the moment of causing the vehicle body to tilt in the left direction of the vehicle or to tilt in the right direction of the vehicle is controlled based on the operation angle of the handlebar and the tilt state of the vehicle body in the left direction of the vehicle or in the right direction detected by the left-right tilt state detecting section in a state where the handlebar is operated.

The control device calculates a driving force and a rotation direction of the steerable wheel driving motor for canceling the tilt state of the vehicle body in the left direction of the vehicle or in the right direction of the vehicle detected by the left-right tilt state detecting section based on, for example, the operation angle of the handlebar. The control device drives the steerable wheel driving motor with the calculated driving force and rotation direction.

In this case, the control device may cause the non-steerable wheel driving motor to generate a driving force in a direction opposite to a direction in which the steerable wheel rotates.

In a case where predetermined conditions are satisfied in the travelling mode, for example, the control device shifts from the travelling mode to the vehicle body tilt controlling mode. The predetermined conditions include a condition 1 and a condition 2 as follows:
Condition 1: A speed of the vehicle is a predetermined speed or less.
Condition 2: The operation angle of the handlebar is a predetermined angle or more.

The predetermined conditions may further include a condition 3 as follows:
Condition 3: No signals for driving the steerable wheel driving motor and the non-steerable wheel driving motor are output.

Two-wheeled vehicle may further include a permission operation section. The permission operation section is operated by a rider and outputs permission information that permits a shift from the travelling mode to the vehicle body tilt controlling mode. The control device shifts from the travelling mode to the vehicle body tilt controlling mode in a case where the predetermined conditions are satisfied in the travelling mode and the permission information is input.

In this case, the rider can determine whether to shift to a self-standing mode.

The two-wheeled vehicle may further include a notification section. The notification section notifies the rider that a shift from the travelling mode to the vehicle body tilt controlling mode is performable in a case where the predetermined conditions are satisfied in the travelling mode. The control device shifts from the travelling mode to the vehicle body tilt controlling mode in a case where the predetermined conditions are satisfied in the travelling mode and the permission information is input in a notification state by the notification section.

In this case, the rider can be notified that a shift from the travelling mode to the vehicle body tilt controlling mode is performable.

In a case where the predetermined conditions are not satisfied any more in the vehicle body tilt controlling mode, the control device may shift from the vehicle body tilt controlling mode to the travelling mode.

The two-wheeled vehicle may further include an operating element that is operated by a rider. In this case, the control device controls the driving force of each of the steerable wheel driving motor and the non-steerable wheel driving motor in accordance with an operation state of the operating element.

In the aspect described above, the speed of the vehicle can be adjusted based on the will of the rider.

### BRIEF DESCRIPTION OF DRAWINGS

FIG. 1 is a right side view illustrating an electric two-wheeled vehicle serving as a two-wheeled vehicle according to an embodiment of the present teaching.
FIG. 2 is a block diagram for describing a configuration of a control system of the electric two-wheeled vehicle.
FIG. 3 is a schematic view illustrating a general configuration of a handlebar angle sensor.
FIG. 4 is a flowchart for describing an example of operation of a controller when determining whether vehicle body tilt control of the vehicle can be performed or not.
FIG. 5 is a flowchart for describing an example of operation of the controller when controlling the vehicle body tilt of the vehicle.
FIG. 6 is an illustration for describing a driving force when the vehicle body tilt of the vehicle is controlled.
FIG. 7 is an illustration showing a state in which the handlebar is rotated from a reference position to the right and a vehicle body frame tilts to the right.
FIG. 8 is an illustration showing a driving force and a rotation direction of each of a front motor and a rear motor when the vehicle body frame is raised from the state illustrated in FIG. 7.
FIG. 9 is an illustration showing a state in which the handlebar is rotated from the reference position to the right and the vehicle body frame tilts to the left.
FIG. 10 is an illustration showing a driving force and a rotation direction of each of the front motor and the rear motor when the vehicle body frame is raised from the state illustrated in FIG. 9.
FIG. 11 is an illustration showing a state in which the handlebar is rotated from the reference position to the left and the vehicle body frame tilts to the right
FIG. 12 is an illustration showing a driving force and a rotation direction of each of the front motor and the rear motor when the vehicle body frame is raised from the state illustrated in FIG. 11.
FIG. 13 is an illustration showing a state in which the handlebar is rotated from the reference position to the left and the vehicle body frame tilts to .the left
FIG. 14 is an illustration showing a driving force and a rotation direction of each of the front motor and the rear motor when the vehicle body frame is raised from the state illustrated in FIG. 13
FIG. 15 is a flowchart for describing an example of operation of the controller when determining whether the vehicle body tilt control of the vehicle can be performed or not.
FIG. 16 is a flowchart for describing another example of operation of the controller when controlling the vehicle body tilt of the vehicle.

### DESCRIPTION OF EMBODIMENT

An inventor of the present teaching has conducted various studies in order to provide a new function to a two-wheeled vehicle that drives each of a steerable wheel and a non-steerable wheel by motors. The inventor finally found that in a case where the vehicle body tilts and the front wheel and the rear wheel are directed to different directions, the tilt of the vehicle body in a left-right direction of the vehicle can be adjusted by adjusting a resultant force of a driving force generated by the motor for the front wheel and a driving force generated by the motor for the rear wheel.

A two-wheeled vehicle according to an embodiment of the present teaching will be described hereinafter with reference to the drawings. In the embodiment, an electric two-wheeled vehicle will be described as an example of the two-wheeled vehicle. In the drawings, the same or corresponding parts are denoted by the same reference numerals, and description thereof will not be repeated.

### Embodiment

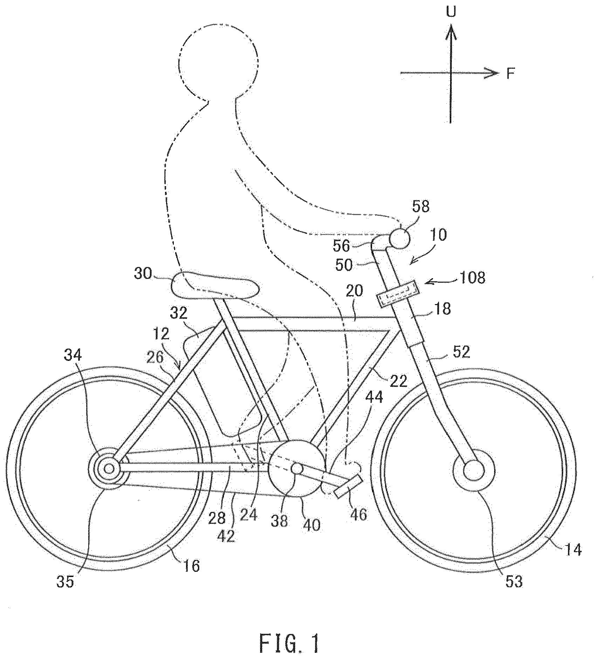

FIG. 1 is a right side view of an electric two-wheeled vehicle 10 according to an embodiment of the present teaching. The electric two-wheeled vehicle 10 includes an electric driving system for driving a front wheel and a rear wheel by motors. The electric two-wheeled vehicle 10 includes a manual driving system for driving the rear wheel 16 with man power.

In the following description, the front, the rear, the left, and the right respectively refer to the front, the rear, the left, and the right when seen from a rider sitting on a saddle 30 of the electric two-wheeled vehicle 10. In FIG. 1, arrow F represents a forward direction of the electric two-wheeled vehicle 10, and arrow U represents an upward direction of the electric two-wheeled vehicle 10.

The electric two-wheeled vehicle 10 includes a vehicle body frame 12, a front wheel 14 serving as a steerable wheel, and the rear wheel 16 serving as a non-steerable wheel. The vehicle body frame 12 supports the front wheel 14 and the rear wheel 16.

The vehicle body frame 12 includes a head pipe 18, an upper pipe 20, a front pipe 22, a seat pipe 24, a pair of left and right rear pipes 26 and 26, and a pair of left and right lower pipes 28 and 28.

The upper pipe 20 extends from the head pipe 18 rearward. The front pipe 22 is disposed below the upper pipe 20 and extends from the head pipe 18 rearward and downward. The rear end of the front pipe 22 is connected to a bottom bracket (not shown). The seat pipe 24 extends from the bottom bracket upward. The rear end of the upper pipe 20 is connected to the seat pipe 24. The saddle 30 is attached to the upper end of the seat pipe 24. A battery 32 is attached to the seat pipe 24 below the saddle 30.

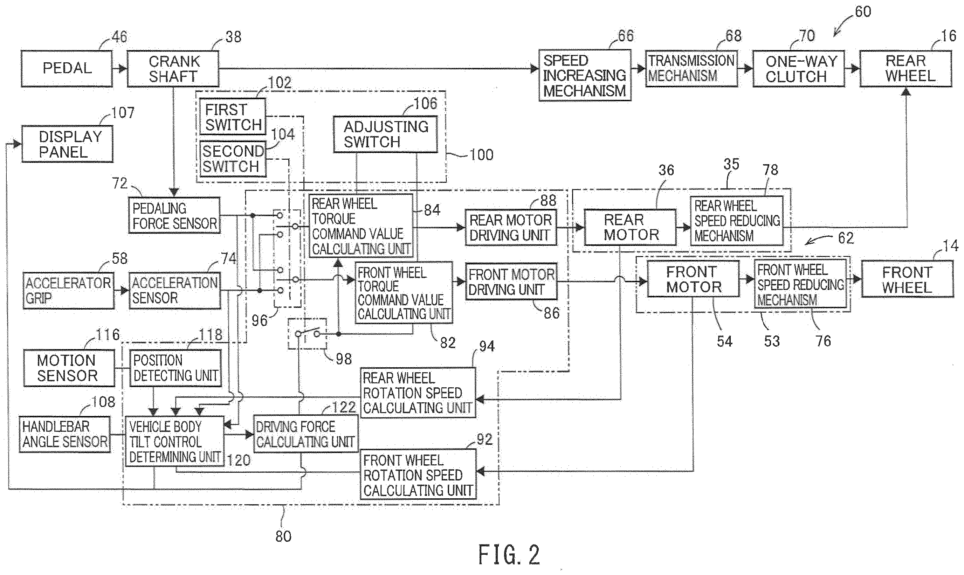

The pair of left and right rear pipes 26 and 26 extends from the seat pipe 24 rearward and downward. The pair of left and right lower pipes 28 and 28 extends from the bottom bracket rearward. The rear ends of the pair of lower pipes 28 and 28 are connected to the rear ends of the pair of rear pipes 26 and 26. The rear wheel 16 is rotatably attached to a portion where the lower pipe 28 and the rear pipe 26 are connected together. The rear wheel 16 is located at a center in the left-right directions of the vehicle. A rear sprocket 34 is fixed to the rear wheel 16. A rear wheel driving device 35 is disposed in a hub of the rear wheel 16. The rear wheel driving device 35 includes a rear motor 36 and a rear wheel speed reducing mechanism 78 illustrated in FIG. 2. The rear wheel driving device 35 exerts a driving force to the rear wheel 16.

A part (non-rotating part) of a pedaling force sensor 72 is attached to the bottom bracket. A crank shaft 38 is rotatably attached to the bottom bracket. Crank arms 44 are attached to both ends of the crank shaft 38. Pedals 46 are attached to the crank arms 44. When a rider operates the pedals 46 (specifically presses the pedals 46), the crank shaft 38 thereby rotates.

A part of the pedaling force sensor 72 (rotating part) is attached to the crank shaft 38. A front sprocket 40 is attached to the crank shaft 38. An endless chain 42 is wound around the rear sprocket 34 and the front sprocket 40. Rotation of the crank shaft 38 is transferred from the front sprocket 40 to the rear sprocket 34 through the chain 42.

A steering shaft 50 is rotatably inserted in the head pipe 18. A front fork 52 is attached to the lower end of the steering shaft 50. The front wheel 14 is rotatably attached to the lower end of the front fork 52. The front wheel 14 is located at the center in the left-right directions of the vehicle. A front wheel driving device 53 is disposed in a hub of the front wheel 14. The front wheel driving device 53 includes the front motor 54 and the front wheel speed reducing mechanism 76 illustrated in FIG. 2. The front wheel driving device 53 exerts a driving force to the front wheel 14. A handlebar 56 is attached to the upper end of the steering shaft 50. When the rider rotates the handlebar 56, the steering shaft 50 thereby rotates. Accordingly, the front fork 52 and the front wheel 14 rotate. Consequently, the travelling direction of the vehicle changes.

An accelerator grip 58 is disposed on the handlebar 56. The accelerator grip 58 is rotatably disposed on the handlebar 56. Based on the amount of operation of the accelerator grip 58, outputs of the front motor 54 and the rear motor 36 are adjusted.

FIG. 2 is a block diagram for describing a configuration of a control system of the electric two-wheeled vehicle 10. The electric two-wheeled vehicle 10 includes a manual driving system 60 and an electric driving system 62. The manual driving system 60 changes a pedaling force exerted on the pedals 46 by the rider at a predetermined transmission ratio and supplies the pedaling force to the rear wheel 16. The electric driving system 62 supplies driving forces of the front motor 54 and the rear motor 36 to the front wheel 14 and the rear wheel 16.

The manual driving system 60 includes the crank shaft 38 that is caused to rotate by a pedaling force exerted on the pedals 46, a speed increasing mechanism 66, a transmission mechanism 68, and a one-way clutch 70. The speed increasing mechanism 66 includes the front sprocket 40, the rear sprocket 34, and the chain 42. The rotational speed of the crank shaft 38 increases in accordance with a ratio in the number of teeth between the front sprocket 40 and the rear sprocket 34. The transmission mechanism 68 is disposed in, for example, the hub of the rear wheel 16. The transmission mechanism 68 changes the speed of rotation of an input shaft coupled to the rear sprocket 34 at one of a plurality of stages (e.g., three stages) of the transmission ratio, and outputs the speed to an output shaft. The one-way clutch 70 transfers a rotation force of the output shaft of the transmission mechanism 68 in one direction (forward direction) to the rear wheel 16, and does not transfer a rotation force thereof in a reverse direction (rearward direction). The speed of the rotation force (manual torque) in the forward direction applied to a crank 64 is increased by the speed increasing mechanism 66, and then the increased speed is changed by the transmission mechanism 68 and is transferred to the rear wheel 16 through the one-way clutch 70.

The electric driving system 62 drives the front motor 54 and the rear motor 36 in accordance with an output of the pedaling force sensor 72 or an output of an acceleration sensor 74. The pedaling force sensor 72 detects a pedaling force (torque) exerted on the crank shaft 38, and outputs a signal (pedaling force signal) in accordance with the detected pedaling force. The acceleration sensor 74 detects the amount of operation of the accelerator grip 58, and outputs a signal (acceleration sensor) in accordance with the amount of operation.

The electric driving system 62 includes the pedaling force sensor 72, the acceleration sensor 74, the front motor 54, the rear motor 36, the front wheel speed reducing mechanism 76, the rear wheel speed reducing mechanism 78, and a controller 80. The controller 80 drives the front motor 54 and the rear motor 36 in accordance with an output of the pedaling force sensor 72 or the acceleration sensor 74. Rotation of the front motor 54 is subjected to speed reduction by the front wheel speed reducing mechanism 76, and is transferred to the front wheel 14. Rotation of the rear motor 36 is subjected to speed reduction by the rear wheel speed reducing mechanism 78, and is transferred to the rear wheel 16. The front motor 54 and the rear motor 36 can rotate in the forward direction and the reverse direction.

The controller 80 includes a front wheel torque command value calculating unit 82, a rear wheel torque command value calculating unit 84, a front motor driving unit 86, and a rear motor driving unit 88. The front wheel torque command value calculating unit 82 calculates a front wheel torque command value in accordance with an output of the pedaling force sensor 72 or the acceleration sensor 74. The rear wheel torque command value calculating unit 84 calculates a rear wheel torque command value in accordance with an output of the pedaling force sensor 72 or the acceleration sensor 74. The front motor driving unit 86 drives the front motor 54 based on the front wheel torque command value. The rear motor driving unit 88 drives the rear motor 36 based on the rear wheel torque command value.

Here, the front wheel torque command value is a command value of a driving torque that is to be generated by the front motor 54. The rear wheel torque command value is a command value of a driving torque that is to be generated by the rear motor 36.

The front motor driving unit 86 performs PWM control on a driving electric power from the battery 32 at a duty ratio corresponding to the front wheel torque command value. The driving voltage subjected to the PWM control is applied to the front motor 54. Accordingly, a driving current corresponding to the front wheel torque command value flows in the front motor 54.

The rear motor driving unit 88 performs PWM control on driving electric power from the battery 32 at a duty ratio corresponding to the rear wheel torque command value. The driving voltage subjected to PWM control is applied to the rear motor 36. Accordingly, a driving current corresponding to the rear wheel torque command value flows in the rear motor 36.

The controller 80 further includes a front wheel rotational speed calculating unit 92 and a rear wheel rotational speed calculating unit 94. The front wheel rotational speed calculating unit 92 calculates the rotational speed of the front wheel 14 from the rotational speed of the front motor 54. The rear wheel rotational speed calculating unit 94 calculates the rotational speed of the rear wheel 16 from the rotational speed of the rear motor 36.

The front wheel 14 and the rear wheel 16 may have the same size or different sizes. In a case where the front wheel 14 and the rear wheel 16 have the same size, a conversion ratio between the rotational speed of the front wheel 14 and the speed of the electric two-wheeled vehicle 10 is equal to a conversion ratio between the rotational speed of the rear wheel 16 and the speed of the electric two-wheeled vehicle 10.

The controller 80 further includes a shift switch 96 and a control switch 98. The shift switch 96 switches between a first connection state and a second connection state. In the first connection state, an output of the pedaling force sensor 72 is input to the front wheel torque command value calculating unit 82 and the rear wheel torque command value calculating unit 84. In the first connection state, an output of the acceleration sensor 74 is not input to any of the front wheel torque command value calculating unit 82 and the rear wheel torque command value calculating unit 84. In the second connection state, the output of the acceleration sensor 74 is input to the front wheel torque command value calculating unit 82 and the rear wheel torque command value calculating unit 84. In the second connection state, the output of the pedaling force sensor 72 is not input to any of the front wheel torque command value calculating unit 82 and the rear wheel torque command value calculating unit 84. The control switch 98 switches between permission and inhibition of a signal input from a driving force calculating unit 122 to the front wheel torque command value calculating unit 82 and the rear wheel torque command value calculating unit 84.

The electric two-wheeled vehicle 10 further includes a switch box 100. The switch box 100 includes a first switch 102, a second switch 104, and an adjusting switch 106.

The switch box 100 is disposed on, for example, the handlebar 56. The first switch 102 switches an operation of the control switch 98. The second switch 104 switches an operation of the shift switch 96. The adjusting switch 106 switches a ratio between a driving force of the front motor 54 and a driving force of the rear motor 36.

The electric two-wheeled vehicle 10 further includes a display panel 107. The display panel 107 is disposed on, for example, the handlebar 56. The display panel 107 displays information on control of driving forces of the front motor 54 and the rear motor 36, for example. Specifically, the display panel 107 performs one of a display indicating that the vehicle is in a travelling mode, a display indicating that the vehicle can shift from the travelling mode to a vehicle body tilt controlling mode, and a display showing that the vehicle is in the vehicle body tilt controlling mode. In the travelling mode, the electric two-wheeled vehicle 10 travels in accordance with the amount of operation of the accelerator grip 58 or the magnitude of a pedaling force. In the vehicle body tilt controlling mode, the vehicle body frame 12 of the electric two-wheeled vehicle 10 suppresses a tilt of the vehicle in the left-right directions. Consequently, in the vehicle body tilt controlling mode, the electric two-wheeled vehicle 10 can stand by itself without assistance of the rider.

The electric two-wheeled vehicle 10 further includes a handlebar angle sensor 108. The handlebar angle sensor 108 detects an operation angle of the handlebar 56. Suppose the straight travelling direction of the vehicle is a reference position (0°), the handlebar angle sensor 108 can detect an operating angle of the handlebar 58 in a range of 90 degrees at each of the left and right of the reference position, for example.

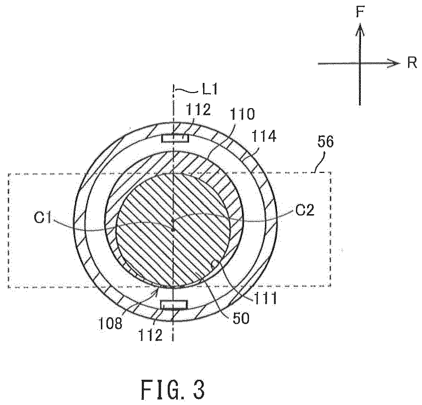

With reference to FIG. 3, the handlebar angle sensor 108 will be described. FIG. 3 is a schematic view illustrating a general configuration of the handlebar angle sensor 108.

The handlebar angle sensor 108 includes a permanent magnet 110 and two hall elements 112 and 112.

The permanent magnet 110 has a ring shape. That is, the permanent magnet 110 has a hole 111. In a plan view, a center C1 of the hole 111 is displaced from a center C2 of the permanent magnet 110. Thus, the thickness of the permanent magnet 110 in the radial direction varies in the circumferential direction.

The permanent magnet 110 is fixed to the steering shaft 50. Specifically, the steering shaft 50 is inserted in the hole 111 formed in the permanent magnet 110. A method for fixing the permanent magnet 110 to the steering shaft 50 is, for example, adhesion. Since the permanent magnet 110 is fixed to the steering shaft 50, the permanent magnet 110 rotates integrally with the steering shaft 50.

The two hall elements 112 and 112 are fixed to the head pipe 18 through a bracket 114. One of the hall elements 112 is disposed forward of the permanent magnet 110. The other hall element 112 is disposed rearward of the permanent magnet 110. The two hall elements 112 and 112 are disposed on a line L1 connecting the center C1 to the center C2. In the example illustrated in FIG. 3, the line L1 extends in front-rear directions of the vehicle.

As described above, the thickness of the permanent magnet 110 in the radial direction varies in the circumferential direction. Thus, when the steering shaft 50 rotates with an operation of the handlebar 56, the size of a gap formed between the hall elements 112 and 112 and the permanent magnet 110 changes. Consequently, the intensity of a magnetic field detected by the hall elements 112 and 112 changes. Since the intensity of the magnetic field changes, outputs of the hall elements 112 and 112 change. Based on the outputs of the hall elements 112 and 112, the operation angle of the handlebar 56 can be detected.

With reference to FIG. 2 again, description will be given. The electric two-wheeled vehicle 10 further includes a motion sensor 116 serving as a left-right tilt state detecting section. The motion sensor 116 is disposed under the saddle 30, for example. The motion sensor 116 is not limited to a specific type as long as the sensor 116 detects accelerations or angular accelerations of three or more shafts.

The controller 80 further includes a position detecting unit 118, a vehicle body tilt control determining unit 120, and the driving force calculating unit 122. Based on a detection signal of the motion sensor 116, the position detecting unit 118 calculates the position of the saddle 30. The position of the saddle 30 is a position on an XY plane (horizontal plane) where X directions are the left-right directions of the vehicle and Y directions are the front-rear directions of the vehicle. The position of the saddle 30 is calculated as the amount of movement from a position at which an output in the X directions and an output in the Y directions are zero among outputs of the motion sensor 116. The vehicle body tilt control determining unit 120 determines whether control for suppressing a tilt of the vehicle body frame 12 of the electric two-wheeled vehicle 10 in the left-right directions of the vehicle can be performed or not. The driving force calculating unit 122 calculates driving forces of the front motor 54 and the rear motor 36 when control for suppressing a tilt of the vehicle body frame 12 of the electric two-wheeled vehicle 10 in the left-right directions of the vehicle are performed.

In the control for suppressing a tilt of the vehicle body frame 12 of the electric two-wheeled vehicle 10 in the left-right directions of the vehicle, for example, a position at which outputs in the front-rear directions (Y directions) and the left-right directions (X directions) are zero among outputs of the motion sensor 116 (target position) is a feedback value of a posture of the vehicle body frame 12 of the electric two-wheeled vehicle 10 when the tilt in the left-right directions of the vehicle is suppressed. The posture is controlled by using driving forces of the front wheel 14 and the rear wheel 16. A difference between the target position and a current position is subjected to PID control so that the posture is controlled.

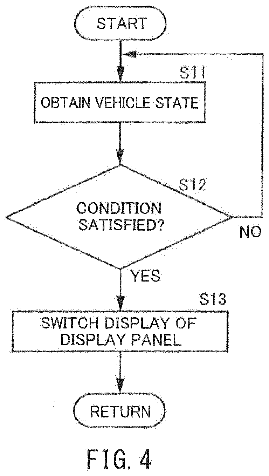

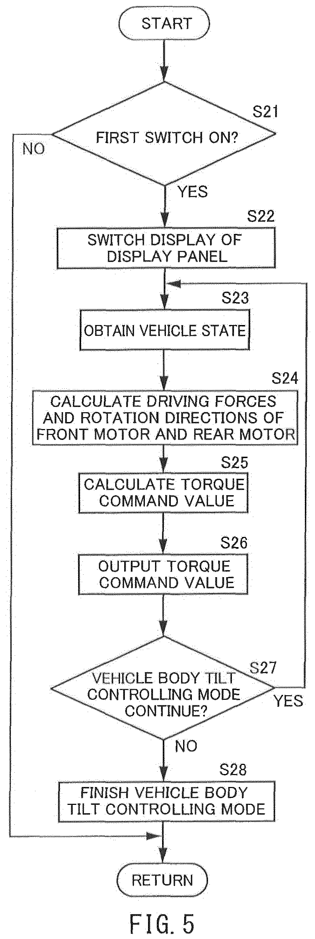

With reference to FIGS. 4 and 5, a process for suppressing the tilt of the vehicle body frame 12 of the electric two-wheeled vehicle 10 in the left-right directions of the vehicle will now be described. FIG. 4 is a flowchart for describing an operation of the controller 80 when determining whether vehicle body tilt control of the vehicle can be performed or not. FIG. 5 is a flowchart for describing an operation of the controller 80 when vehicle body tilt control of the vehicle is performed.

First, with reference to FIG. 4, an operation of the controller 80 in determining whether vehicle body tilt control of the vehicle can be performed or not.

In step S11, the controller 80 obtains the state of the vehicle. Specifically, the vehicle body tilt control determining unit 120 reads a detection signal of the handlebar angle sensor 108. The vehicle body tilt control determining unit 120 reads the rotational speed of the front wheel 14 calculated by the front wheel rotational speed calculating unit 92. The vehicle body tilt control determining unit 120 reads the rotational speed of the rear wheel 16 calculated by the rear wheel rotational speed calculating unit 94. The vehicle body tilt control determining unit 120 reads a detection signal of the pedaling force sensor 72, The vehicle body tilt control determining unit 120 reads a detection signal of the acceleration sensor 74.

Subsequently, in step S12, the vehicle body tilt control determining unit 120 determines whether the electric two-wheeled vehicle 10 satisfies conditions for shifting to vehicle body tilt control or not based on the signal read in step S11. The conditions include the following conditions 1 to 3:

### Condition 1

The absolute value of the operation angle of the handlebar 56 is a predetermined value or more. The absolute value of the operation angle of the handlebar 56 is, for example, 10° or more.

### Condition 2

The vehicle speed is a predetermined speed or less. The vehicle speed is, for example, 3 km/h or less.

### Condition 3

The amount of operation of the accelerator grip 58 and the pedaling force are near zero (e.g., 5% or less of the maximum detected pedaling force).

Whether condition 1 is satisfied or not is determined as follows, for example.

The vehicle body tilt control determining unit 120 calculates an operating angle of the handlebar 56 based on a detection signal of the handlebar angle sensor 108 that has been read. Subsequently, the vehicle body tilt control determining unit 120 determines whether or not the absolute value of the calculated operation angle of the handlebar 56 is a predetermined value (e.g., 10°) or more.

If the calculated operation angle of the handlebar 56 is the predetermined value or more, the vehicle body tilt control determining unit 120 determines that the condition 1 is satisfied. On the other hand, if the calculated operation angle of the handlebar 56 is smaller than the predetermined value, the vehicle body tilt control determining unit 120 determines that the condition 1 is not satisfied.

Whether condition 2 is satisfied or not is determined as follows, for example.

First, the vehicle body tilt control determining unit 120 converts the rotational speed of the front wheel 14 or the rear wheel 16 that has been read at a predetermined conversion ratio, thereby calculating a vehicle speed. The vehicle body tilt control determining unit 120 determines whether or not the calculated vehicle speed is a predetermined speed (e.g., 3 km/h) or less.

If the calculated vehicle speed is the predetermined speed or less, the vehicle body tilt control determining unit 120 determines that the condition 2 is satisfied. On the other hand, if the calculated vehicle speed is higher than the predetermined speed, the vehicle body tilt control determining unit 120 determines that the condition 2 is not satisfied.

Whether condition 3 is satisfied or not is determined as follows, for example.

First, the vehicle body tilt control determining unit 120 calculates a magnitude of a pedaling force based on the detection signal of the pedaling force sensor 72 that has been read. Subsequently, the vehicle body tilt control determining unit 120 determines whether or not the calculated pedaling force is a predetermined magnitude (e.g., 5% of the maximum detected pedaling force) or less.

If the calculated pedaling force is not the predetermined magnitude or less, the vehicle body tilt control determining unit 120 determines that the condition 3 is not satisfied. On the other hand, if the calculated pedaling force is the predetermined magnitude or less, the vehicle body tilt control determining unit 120 calculates the amount of operation of the accelerator grip 58 based on the detection signal of the acceleration sensor 74 that has been read. Thereafter, the vehicle body tilt control determining unit 120 determines whether or not the calculated amount of operation of the accelerator grip 58 is a predetermined amount (e.g., 5% of the maximum detected amount of operation) or less.

If the calculated amount of operation of the accelerator grip 58 is not the predetermined amount or less, the vehicle body tilt control determining unit 120 determines that the condition 3 is not satisfied. On the other hand, if the calculated amount of operation of the accelerator grip 58 is the predetermined amount or less, the vehicle body tilt control determining unit 120 determines that the condition 3 is satisfied.

In the foregoing manner, the vehicle body tilt control determining unit 120 determines whether each of the condition 1, the condition 2, and the condition 3 is satisfied or not. If one of the condition 1, the condition 2, or the condition 3 is not satisfied (step S12: NO), the vehicle body tilt control determining unit 120 performs the process of step S11.

On the other hand, if all the condition 1, the condition 2, and the condition 3 are satisfied (step S12: YES), the vehicle body tilt control determining unit 120 switches the display of the display panel 107 in step S13. Specifically, the display panel 107 switches display information indicating that the electric two-wheeled vehicle 10 is travelling to display information indicating that vehicle body tilt control of the electric two-wheeled vehicle 10 can be performed. That is, the display panel 107 switches display information indicating that the operation mode of the electric two-wheeled vehicle 10 is the travelling mode to display information indicating that the operation mode of the electric two-wheeled vehicle 10 can be shifted from the travelling mode to the vehicle body tilt controlling mode. Thereafter, the vehicle body tilt control determining unit 120 finishes the process of determining whether the vehicle body tilt control can be performed or not.

Subsequently, with reference to FIG. 5, a specific operation of the controller 80 in controlling a vehicle body tilt of the vehicle will be described.

First, in step S21, the controller 80 determines whether the first switch 102 is ON or not. If the first switch 102 is OFF (step S21: NO), the controller 80 finishes the process.

On the other hand, if the first switch 102 is ON (step S21: YES), the controller 80 switches a display of the display panel 107 in step S22. Specifically, the display panel 107 switches display information indicating that vehicle body tilt control of the electric two-wheeled vehicle 10 can be performed to display information indicating that the vehicle body tilt control of the electric two-wheeled vehicle 10 is being executed. That is, the display panel 107 switches display information indicating that the operation mode of the electric two-wheeled vehicle 10 can be shifted from the travelling mode to the vehicle body tilt controlling mode to display information indicating that the operation mode of the electric two-wheeled vehicle 10 is the vehicle body tilt controlling mode.

Thereafter, the controller 80 obtains the state of the vehicle in step S23. Specifically, the position calculating unit 118 reads a detection signal of the motion sensor 116. Based on the detection signal of the motion sensor 116 that has been read, the position calculating unit 118 calculates a position of the saddle 30 (position on the XY plane).

Subsequently, in step S24, the driving force calculating unit 122 calculates rotation directions and driving forces of front motor 54 and the rear motor 36 based on the position of the saddle 30 calculated by the position calculating unit 118. Specifically, the driving force calculating unit 122 calculates a difference between the position (current position) of the saddle 30 calculated by the position calculating unit 118 and a target position. In accordance with the calculated difference and an operation state of the handlebar 56, the driving force calculating unit 122 calculates the driving forces and the rotation directions of the front motor 54 and the rear motor 36. The driving forces and the rotation directions of the front motor 54 and the rear motor 36 are calculated so that the calculated driving forces and rotation directions match with a vector of a force that returns the position of the saddle 30 to the target position from the current position.

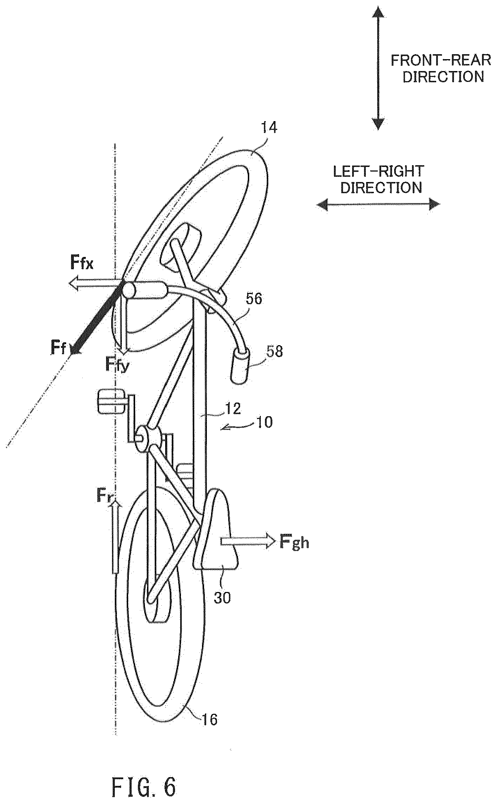

The driving forces and the rotation directions of the front motor 54 and the rear motor 36 change in accordance with the difference between the current position and the target position of the saddle 30 and the operation state of the handlebar 56. In view of this, with reference to FIG. 6, a method for calculating driving forces and rotation directions of the front motor 54 and the rear motor 36 will be described. FIG. 6 is an illustration for describing a driving force when a vehicle body tilt of the vehicle is controlled. Although FIG. 6 shows a case where the saddle 30 simply moves from the target position to the right for easy understanding, the saddle 30 can move right-forward or right-rearward from the target position in application. In this case, to return the saddle 30 to the original position, the saddle 30 needs to be moved left-rearward or left-forward.

The gravity is exerted on the vehicle body frame 12. When the vehicle body frame 12 tilts in the left direction or tilts in the right direction (to the right in the example illustrated in FIG. 6), a force is generated in the left-right directions on the XY plane because of the gravity exerted on the vehicle body frame 12. In the example illustrated in FIG. 6, this force is represented as Fgh. In the example illustrated in FIG. 6, the magnitude of the force Fgh represents the magnitude in a plan view of the vehicle.

A force for raising the vehicle body frame 12 against the force Fgh is generated by driving the front motor 54 and the rear motor 36. This will be specifically described as follows.

When the front motor 54 is driven, a force Ff is exerted on the front wheel 14. In a state where the handlebar 56 is operated, the force Ff causes the front wheel 14 to tilt in any of the front-and-rear directions and the left-right directions, in a plan view of the vehicle. In view of this, the force Ff is decomposed in components in the front-rear directions and the left-right directions. In the following description, a component of the force Ff in the left direction or in the right direction will be hereinafter referred to as a force Ffx, and a component of the force Ff in one of the front-rear directions be hereinafter referred to as a force Ffy.

To raise the vehicle body frame 12, the force Ffx is made larger than the force Fgh. To obtain such a force Ffx, the magnitude of the force Ff is set in consideration of the operation angle of the handlebar 56 and the difference between the current position and the target position.

To adjust raising characteristics of the vehicle body frame 12, the magnitude of the force Ffx may be adjusted as appropriate.

To obtain the force Ffx as described above, the rotation direction of the front motor 54 is set in consideration of the operation angle of the handlebar 56 (specifically the direction to which the handlebar 56 is operated). This will be specifically described as follows.

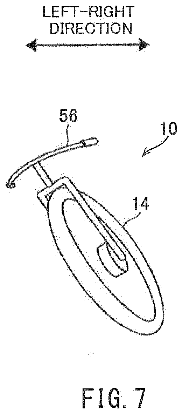

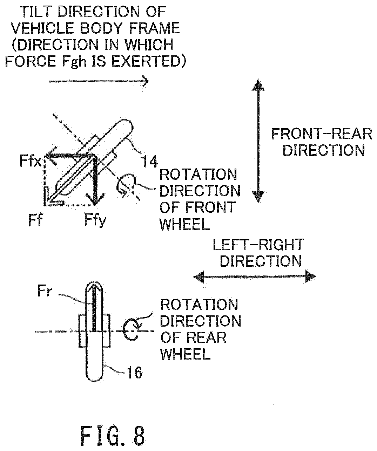

As illustrated in FIG. 7, in a state where the handlebar 56 rotates from a reference position (position at which the vehicle moves straight) to the right (a state where the operation angle is at a positive value), when the vehicle body frame 12 tilts to the right, the force Fgh is exerted in the direction illustrated in FIG. 6. Thus, to cancel the force Fgh by the force Ffx, the rotation direction of the front motor 54 is set so that the front wheel 14 rotates in the reverse direction (direction at which the vehicle moves rearward), as illustrated in FIG. 8.

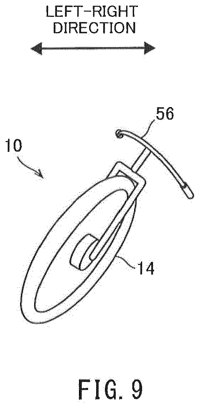

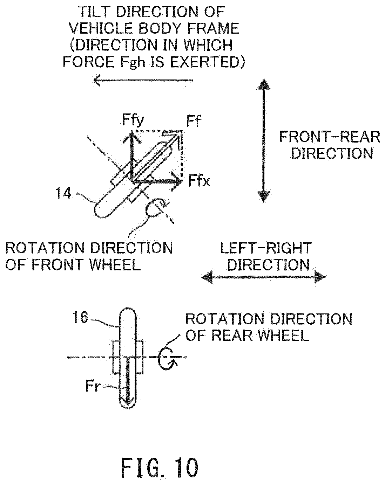

As illustrated in FIG. 9, in the state where the handlebar 56 rotates from the reference position to the right, when the vehicle body frame 12 tilts to the left, the force Fgh is exerted in the direction opposite to the direction illustrated in FIG. 6 (i.e., exerted to the left). Thus, to cancel the force Fgh by the force Ffx, the rotation direction of the front motor 54 is set so that the front wheel 14 rotates in the forward direction (direction at which the vehicle moves forward), as illustrated in FIG. 10.

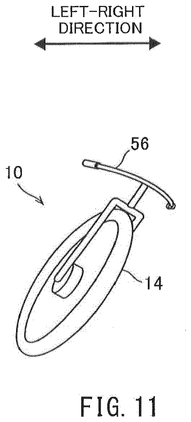

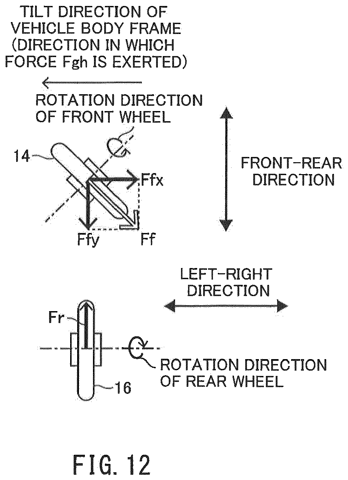

As illustrated in FIG. 11, in a state where the handlebar 56 rotates from the reference position to the left (a state where the handlebar 56 rotates to the opposite side to the side in FIG. 6, i.e., a state where the operation angle is at a negative value), when the vehicle body frame 12 tilts to the left, the force Fgh is exerted in the direction opposite to the direction illustrated in FIG. 6 (i.e., exerted to the left). Thus, to cancel the force Fgh by the force Ffx, the rotation direction of the front motor 54 is set so that the front wheel 14 rotates in the reverse direction, as illustrated in FIG. 12.

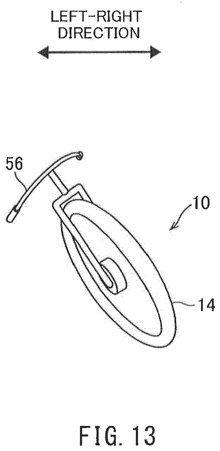

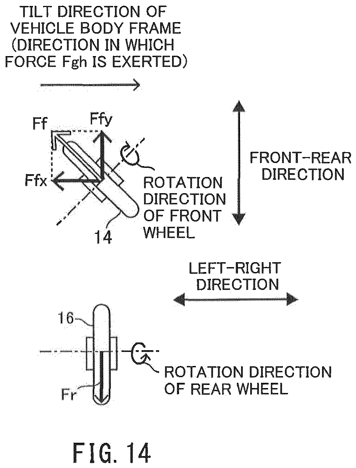

As illustrated in FIG. 13, in the state where the handlebar 56 rotates from the reference position to the left, when the vehicle body frame 12 tilts to the right, the force Fgh is exerted in the direction illustrated in FIG. 6. Thus, to cancel the force Fgh by the force Ffx, the rotation direction of the front motor 54 is set so that the front wheel 14 rotates in the forward direction, as illustrated in FIG. 14.

As described above, by operating the handlebar 56, the force Ff is decomposed to the component in the left-right direction (force Ffx) and the component in the front-rear direction (force Ffy). Here, the force Ffx is canceled by the force Fgh. On the other hand, the force Ffy is exerted as a force for moving the vehicle in the front-rear directions. In a state where the vehicle moves in the front-rear directions, even when the force Fgh is canceled by the force Ffx, the vehicle body frame 12 cannot rise. Thus, the rear motor 36 is driven to exert a force Fr on the rear wheel 16. The force Fr is balanced with the force Ffy so as not to allow the vehicle to move in the front-rear directions.

To take a balance between the force Fr and the force Ffy, the magnitude of the force Fr is set in consideration of the magnitude of the force Ffy.

To take a balance between the force Fr and the force Ffy, the direction in which the force Fr is exerted is set in consideration of the direction in which the force Ffy is exerted. This will be specifically described as follows.

As illustrated in FIG. 7, in the state where the handlebar 56 rotates from the reference position to the right, when the vehicle body frame 12 tilts to the right, the force Fgh is exerted in the direction illustrated in FIG. 6. Thus, to cancel the force Fgh by the force Ffx, the rotation direction of the front motor 54 is set so that the front wheel 14 rotates in the reverse direction, as illustrated in FIG. 8. At this time, the force Ffy is exerted rearward. To take a balance between such a force Ffy and the force Fr, the force Fr is exerted forward. To obtain this state, the rotation direction of the rear motor 36 is set so that the rear wheel 16 rotates in the forward direction (direction in which the vehicle moves forward).

As illustrated in FIG. 9, in the state where the handlebar 56 rotates from the reference position to the right, when the vehicle body frame 12 tilts to the left, the force Fgh causing the vehicle frame 12 to tilt is exerted in the direction opposite to the direction illustrated in FIG. 6 (i.e., exerted to the left). Thus, to cancel the force Fgh by the force Ffx, the rotation direction of the front motor 54 is set so that the front wheel 14 rotates in the forward direction, as illustrated in FIG. 10. At this time, the force Ffy is exerted to the direction opposite to the direction illustrated in FIG. 6 (i.e., exerted forward). To take a balance between such a force Ffy and the force Fr, the force Fr is exerted rearward. To obtain this state, the rotation direction of the rear motor 36 is set so that the rear wheel 16 rotates in the reverse direction (direction in which the vehicle moves rearward).

As illustrated in FIG. 11, in the state where the handlebar 56 rotates from the reference position to the left, when the vehicle body frame 12 tilts to the left, the force Fgh is exerted in the direction opposite to the direction illustrated in FIG. 6 (i.e., exerted to the left). Thus, to cancel the force Fgh by the force Ffx, the rotation direction of the front motor 54 is set so that the front wheel 14 rotates in the opposite direction, as illustrated in FIG. 12. At this time, the force Ffy is exerted rearward. To take a balance between such a force Ffy and the force Fr, the force Fr is exerted forward. To obtain this state, the rotation direction of the rear motor 36 is set so that the rear wheel 16 rotates in the forward direction.

As illustrated in FIG. 13, in the state where the handlebar 56 rotates from the reference position to the left, when the vehicle body frame 12 tilts to the right, the force Fgh is exerted in the direction illustrated in FIG. 6. Thus, to cancel the force Fgh by the force Ffx, the rotation direction of the front motor 54 is set so that the front wheel 14 rotates in the forward direction, as illustrated in FIG. 14. At this time, the force Ffy is exerted to the direction opposite to the direction illustrated in FIG. 6 (i.e., exerted forward). To take a balance between such a force Ffy and the force Fr, the force Fr is exerted rearward. To obtain this state, the rotation direction of the rear motor 36 is set so that the rear wheel 16 rotates in the reverse direction.

With reference to FIG. 5 again, a description will be given. Then, in step S25, the controller 80 calculates a torque command value. This will be specifically described below.

The front wheel torque command value calculating unit 82 calculates a front wheel torque command value corresponding to the driving force and the rotation direction of the front motor 54 calculated in step S24. The rear wheel torque command value calculating unit 84 calculates a rear wheel torque command value corresponding to the driving force and the rotation direction of the rear motor 36 calculated in step S24. The torque command value is calculated by using a map, for example.

Thereafter, in step S26, the controller 80 outputs a torque command value. This will be specifically described below.

The front wheel torque command value calculating unit 82 outputs the front wheel torque command value calculated in step S25 to the front motor driving unit 86. Based on the front wheel torque command value calculated by the front wheel torque command value calculating unit 82, the front motor driving unit 86 drives the front motor 54.

The rear wheel torque command value calculating unit 84 outputs the rear wheel torque command value calculated in step S25 to the rear motor driving unit 88. Based on the rear wheel torque command value calculated by the rear wheel torque command value calculating unit 84, the rear motor driving unit 88 drives the rear motor 36.

Subsequently, in step S27, the controller 80 determines whether to continue the vehicle body tilt control of the vehicle or not. Specifically, the controller 80 determines whether all the conditions 1 through 3 are satisfied or not. If all the conditions 1 through 3 are satisfied (step S27: YES), the controller 80 performs a process of shifting to step S23 in order to continue the vehicle body tilt control of the vehicle.

On the other hand, if any one of the conditions 1 through 3 is not satisfied (step S27: NO), the controller 80 finishes the vehicle body tilt controlling mode in step S28. Specifically, the display panel 107 switches display information indicating that the electric two-wheeled vehicle 10 is under the vehicle body tilt control to display information indicating that the electric two-wheeled vehicle 10 is travelling. That is, the display panel 107 switches display information indicating that the operation mode of the electric two-wheeled vehicle 10 is the vehicle body tilt controlling mode to display information indicating that the operation mode of the electric two-wheeled vehicle 10 is the travelling mode. The first switch 102 switches from the ON state to the OFF state.

Thereafter, the controller 80 finishes the vehicle body tilt control on the vehicle.

Since the amount of operation of the accelerator grip 58 or the pedaling force is not the predetermined value or less any more, when the vehicle body tilt controlling mode shifts to the travelling mode, driving of the front wheel 14 and the rear wheel 16 is preferably started with driving forces smaller than driving forces in accordance with the amount of operation of the accelerator grip 58 or the pedaling force. In this manner, it is possible to prevent rapid acceleration from occurring when the vehicle body tilt controlling mode shifts to the travelling mode.

In the electric two-wheeled vehicle 10, if all the conditions 1 through 3 are satisfied, the travelling mode shifts to the vehicle body tilt controlling mode. In the vehicle body tilt controlling mode, when the vehicle body frame 12 tilts in the left direction or tilts in the right direction, a resultant force of the driving force of the front wheel 14 and the driving force of the rear wheel 16 is adjusted to raise the vehicle body frame 12. Thus, in the electric two-wheeled vehicle 10, a moment of tilting the vehicle body frame 12 in the left direction of the vehicle or in the right direction of the vehicle can be controlled.

As described above, in the electric two-wheeled vehicle 10, it is possible to prevent the vehicle body frame 12 from tilting in the left direction of the vehicle or in the right direction of the vehicle. Thus, when a rider rides on the electric two-wheeled vehicle 10 or when the rider gets off the electric two-wheeled vehicle 10, the electric two-wheeled vehicle 10 may stand by itself. In this case, an action of the rider in riding on the electric two-wheeled vehicle 10 and an action of the rider in getting off the electric two-wheeled vehicle 10 can be made easy. When the rider rides on or gets off the electric two-wheeled vehicle 10, the moment of inertia when the vehicle tilts in the left direction or tilts in the right direction changes. The change in the moment of inertia may be reflected on the torque command value by, for example, feedforward control.

By operating the first switch 102 in a state where the travelling mode can be shifted to the vehicle body tilt controlling mode, the electric two-wheeled vehicle 10 shifts to the vehicle body tilt controlling mode. Thus, the rider can determine whether to shift to the vehicle body tilt controlling mode or not.

In the electric two-wheeled vehicle 10, the display panel 107 displays information indicating that the travelling mode can be shifted to the vehicle body tilt controlling mode. Thus, the rider can recognize a shift from the travelling mode to the vehicle body tilt controlling mode.

### Examples of Application of Embodiment

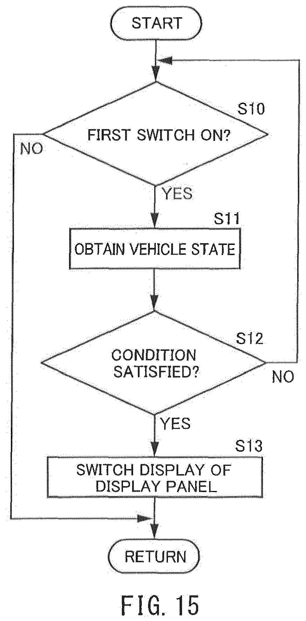

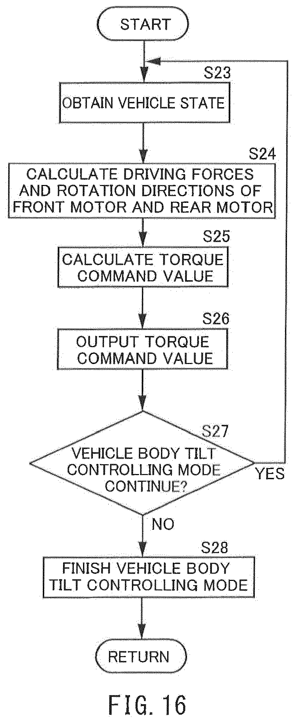

With reference to FIGS. 15 and 16, examples of application of the process for controlling a vehicle body tilt of the vehicle will be described. FIG. 15 is a flowchart for describing another example of operation of the controller 80 when determining whether vehicle body tilt control of the vehicle can be performed or not. FIG. 16 is a flowchart for describing another example of operation of the controller 80 when vehicle body tilt control of the vehicle is performed.

The flowchart of FIG. 15 is different from the flowchart of FIG. 4 in that the process of step S10 is added before the process of step S11. In step S10, the controller 80 determines whether the first switch 102 is ON or not. If the first switch 102 is not ON (step S10: NO), the controller 80 finishes the process. On the other hand, if the first switch 102 is ON (step S10: YES), the controller 80 executes step S11 and subsequent processes.

The flowchart of FIG. 15 is different from the flowchart of FIG. 4 in the process of step S13. Specifically, in the embodiment described above, the "display indicating that the vehicle is in the travelling mode" of the display panel 107 is switched to the "display indicating that a shift from the travelling mode to the vehicle body tilt controlling mode is performable" in step S13. On the other hand, in this example of application, the "display indicating that the vehicle is in the travelling mode" of the display panel 107 is switched to the "display indicating that the vehicle is in the vehicle body tilt controlling mode."

The flowchart of FIG. 16 is different from the flowchart of FIG. 5 in that the processes of step S21 and step S22 are not performed. In addition, the process of step S28 is different. Specifically, in the embodiment described above, the first switch 102 is switched from the ON state to the OFF sate in step S28. On the other hand, in this example of application, the first switch 102 is kept in the ON sate.

In this example of application, in shifting from the travelling mode to the vehicle body tilt controlling mode, the first switch 102 does not need to be operated. Thus, as compared to the embodiment described above, a shift from the travelling mode to the vehicle body tilt controlling mode is performable quickly.

### Other Embodiments

For example, the electric two-wheeled vehicle 10 may be automatically operated. In this case, the travelling direction of the electric two-wheeled vehicle 10 is determined by using an image captured by a camera provided on the handlebar 56 of the electric two-wheeled vehicle 10, for example. The speed of the electric two-wheeled vehicle 10 is set as appropriate in consideration of a legal speed limit, the degree of congestion of roads, and so forth. When the electric two-wheeled vehicle 10 stops at a signal or the like, control as described in the above embodiment is performed.

In automatically operating the electric two-wheeled vehicle 10, the accelerator grip 58 is unnecessary. The handlebar 56 and the pedals 46 are also unnecessary.

The embodiment of the present teaching has been described above, but the embodiment is merely an example for carrying out the teaching. Thus, the teaching is not limited to the embodiment, and the embodiment may be modified as necessary within a range not departing from the gist of the teaching.

For example, in the above embodiment, the first switch 102 and the control switch 96 may be omitted.

For example, in the above embodiment, the second switch 104 and the shift switch 98 may be omitted.

For example, although in the above embodiment, the driving forces of the front motor 54 and the rear motor 36 are controlled in accordance with the amount of operation of the accelerator grip 58 or the magnitude of a pedaling force, the driving forces of the front motor 54 and the rear motor 36 may be controlled in accordance with the amount of operation of the accelerator grip 58 and the magnitude of the pedaling force.

For example, in the above embodiment, the accelerator grip 58 and the acceleration sensor 74 may be omitted.

For example, in the above embodiment, the electric two-wheeled vehicle 10 may not include the manual driving system 60.

For example, in the above embodiment, the handlebar angle sensor 108 provides an analog output, but may provide a digital output.

For example, in addition to a display of the display panel 107 or instead of a display of the display panel 107, the rider may be notified of a shift from the travelling mode to the vehicle body tilt controlling mode or a shift from the vehicle body tilt controlling mode to the travelling mode, by using sound.

For example, in shifting from the travelling mode to the vehicle body tilt controlling mode, the rider may be notified which one of the conditions 1 through 3 is not satisfied.

For example, in the above embodiment, a tilt of the vehicle body is controlled by using outputs in the front-rear directions and the left-right directions among outputs of the motion sensor 116. Alternatively, in a case where the road surface is sloped, for example, the tilt of the vehicle body may be controlled additionally in consideration of outputs in the top-bottom directions of the motion sensor 116.

For example, the motors for driving the front wheel and the rear wheel may not be provided in the hubs.

The above embodiment is directed to the case where the steerable wheel is the front wheel, but the steerable wheel may be the rear wheel, for example.

For example, in the above embodiment, in raising the vehicle body frame 12, the rear wheel 16 may be braked so that the rear wheel 16 does not move in the front-rear directions of the vehicle body.

## Claims

1. A two-wheeled vehicle having a vehicle body that tilts to the left when the two-wheeled vehicle turns to the left, and that tilts to the right when the two-wheeled vehicle turns to the right, the two-wheeled vehicle comprising:
one steerable wheel supported by the vehicle body, located at a center in left-right directions of the vehicle, and capable of being steered;
a steerable wheel driving motor that generates a driving force to be transferred to the steerable wheel and is rotatable in a forward direction and a reverse direction;
one non-steerable wheel supported by the vehicle body, located at the center in the left-right directions of the vehicle, disposed forward or rearward of the steerable wheel in front-rear directions of the vehicle, and incapable of being steered;
a non-steerable wheel driving motor that generates a driving force to be transferred to the non-steerable wheel and is rotatable in a forward direction and a reverse direction;
a left-right tilt state detecting section that is mounted on the vehicle body and detects a tilt state of the vehicle body in the left-right directions of the vehicle; and
a control device that controls driving forces generated by the steerable wheel driving motor and the non-steerable wheel driving motor, wherein
the control device includes an in-tilt front-rear driving force adjusting section that adjusts at least one of the driving force generated by the steerable wheel driving motor and the driving force generated by the non-steerable wheel driving motor to set an absolute value of the driving force generated by the steerable wheel driving motor larger than zero based on the tilt state detected by the left-right tilt state detecting section in a case where the vehicle body tilts and a travelling direction of the steerable wheel is directed to the left direction of the vehicle or is directed to the right direction of the vehicle relative to a travelling direction of the non-steerable wheel, and
the control device controls a moment of causing the vehicle body to tilt in the left direction of the vehicle or to tilt in the right direction of the vehicle by adjusting a resultant force of the driving force generated by the steerable wheel driving motor and the driving force generated by the non-steerable wheel driving motor.

2. The two-wheeled vehicle of claim 1, wherein
when the vehicle body tilts in the left direction of the vehicle or tilts in the right direction of the vehicle, the control device adjusts the resultant force of the driving force generated by the steerable wheel driving motor and the driving force generated by the non-steerable wheel driving motor so that the vehicle body rises.

3. The two-wheeled vehicle of claim 1, wherein
when the vehicle body tilts in the left direction of the vehicle or tilts in the right direction of the vehicle, the control device adjusts the resultant force of the driving force generated by the steerable wheel driving motor and the driving force generated by the non-steerable wheel driving motor so as to adjust a characteristic in rising of the vehicle body.

4. The two-wheeled vehicle of any one of claims 1 to 3, further comprising:
a handlebar that is disposed on the vehicle body and changes a travelling direction of the vehicle; and
an angle detecting device that outputs angle information indicating an operation angle of the handlebar.

5. The two-wheeled vehicle of claim 4, wherein
the control device controls the driving force of each of the steerable wheel driving motor and the non-steerable wheel driving motor in a plurality of operation modes, and
the plurality of operation modes include
a travelling mode in which the vehicle travels, and
a vehicle body tilt controlling mode in which a moment of causing the vehicle body to tilt in the left direction of the vehicle or to tilt in the right direction of the vehicle is controlled based on the operation angle of the handlebar and the tilt state detected by the left-right tilt state detecting section in a state where the handlebar is operated.

6. The two-wheeled vehicle of claim 4 or 5, wherein
the control device
calculates a driving force and a rotation direction of the steerable wheel driving motor for canceling the tilt state detected by the left-right tilt state detecting section based on the operation angle of the handlebar, and
drives the steerable wheel driving motor with the calculated driving force and rotation direction.

7. The two-wheeled vehicle of claim 6, wherein
the control device causes the non-steerable wheel driving motor to generate a driving force in a direction opposite to a direction in which the steerable wheel rotates.

8. The two-wheeled vehicle of any one of claims 5 to 7, wherein
the control device shifts from the travelling mode to the vehicle body tilt controlling mode in a case where predetermined conditions are satisfied in the travelling mode, and
the predetermined conditions include a condition 1 and a condition 2:
condition 1: a speed of the vehicle is a predetermined speed or less, and
condition 2: the operation angle of the handlebar is a predetermined angle or more.

9. The two-wheeled vehicle of claim 8, wherein
the predetermined conditions further include a condition 3:
condition 3: no signals for driving each of the steerable wheel driving motor and the non-steerable wheel driving motor are output.

10. The two-wheeled vehicle of claim 8 or 9, further comprising
a permission operation section that is operated by a rider and outputs permission information that permits a shift from the travelling mode to the vehicle body tilt controlling mode, wherein
the control device shifts from the travelling mode to the vehicle body tilt controlling mode in a case where the predetermined conditions are satisfied in the travelling mode and the permission information is input.

11. The two-wheeled vehicle of claim 10, further comprising
a notification section that notifies the rider that a shift from the travelling mode to the vehicle body tilt controlling mode is performable in a case where the predetermined conditions are satisfied in the travelling mode, wherein
the control device shifts from the travelling mode to the vehicle body tilt controlling mode in a case where the predetermined conditions are satisfied in the travelling mode and the permission information is input in a notification state by the notification section.

12. The two-wheeled vehicle of any one of claims 8 to 11, wherein
in a case where the predetermined conditions are not satisfied any more in the vehicle body tilt controlling mode, the control device shifts from the vehicle body tilt controlling mode to the travelling mode.

13. The two-wheeled vehicle of any one of claims 1 to 12, further comprising
an operating element that is operated by a rider, wherein
the control device controls the driving force of each of the steerable wheel driving motor and the non-steerable wheel driving motor in accordance with an operation state of the operating element.
